# EUROPÄISCHE PATENTSCHRIFT

(11) **EP 1 311 415 B1**
(45) Veröffentlichungstag und Bekanntmachung des Hinweises auf die Patenterteilung: **06.04.2005**
(21) Anmeldenummer: 01967243.5
(22) Anmeldetag: 08.08.2001
(51) Int. Cl.: B60S 1/04

(54) **WISCHANLAGE FÜR EINE SCHEIBE EINES KRAFTFAHRZEUGS SOWIE VERFAHREN ZUM BEFESTIGEN EINER SCHEIBENWISCHANLAGE**
WIPING SYSTEM FOR A WINDSCREEN OF AN AUTOMOBILE AND METHOD FOR FIXING A WINDSCREEN WIPING SYSTEM
SYSTEME D'ESSUIE-GLACE POUR UNE VITRE D'UN VEHICULE AUTOMOBILE ET PROCEDE POUR LA FIXATION D'UN SYSTEME D'ESSUIE-GLACE

(30) Priorität: 11.08.2000 DE 10039293
(43) Veröffentlichungstag der Anmeldung: 21.05.2003
(73) Patentinhaber: Valeo Systemes d'Essuyage, 78321 Le Mesnil Saint Denis (FR)
(72) Erfinder: SCHMID, Eckhardt, 74336 Brackenheim (DE); EGNER-WALTER, Bruno, 74076 Heilbronn (DE)
(74) Vertreter: Jahn, Wolf-Diethart
(86) Internationale Anmeldenummer: PCT/EP2001/009155
(87) Internationale Veröffentlichungsnummer: WO 2002/014123

(56) Entgegenhaltungen:
- WO-A-00/06429
- FR-A- 2 770 880
- US-A- 5 609 329

## Beschreibung

Die vorliegende Erfindung betrifft eine Wischanlage für eine Scheibe eines Kraftfahrzeugs mit einer verschraubungsfreien Befestigungsvorrichtung, welche mindestens drei voneinander beabstandete Befestigungsglieder aufweist, von denen zwei auf einer Verbindungslinie liegen und das dritte von der Verbindungslinie beabstandet ist, und welche mindestens drei Aufnahmeeinrichtungen umfasst, in die die Befestigungsglieder eingreifen können, wobei zwischen mindestens einem Befestigungsglied und der entsprechenden Aufnahmeeinrichtung ein Dämpfungselement aus einem schwingungsdämpfenden Material vorgesehen ist.

Eine Befestigungsvorrichtung dieser Art ist aus der DE 198 33 404 A1 bzw.WO-A-00/06429 bekannt. Die dort offenbarte Scheibenwischanlage umfasst eine Tragkonstruktion, an der insgesamt drei als zylindrische Steckzapfen ausgebildete Befestigungsglieder vorgesehen sind. Diese Befestigungslieder sind also anlagenseitig angeordnet. Sie werden in Aufnahmeöffnungen axial eingeführt, die in speziellen Halteteilen vorhanden sind, die am Fahrzeugkörper befestigt, also fahrzeugseitig vorgesehen sind. Zur schwingungsmäßigen Abkopplung der Scheibenwischanlage vom Fahrzeugkörper sind die fahrzeugseitigen Aufnahmeöffnungen mit Tüllen aus Gummi versehen, die in entsprechende Durchbrüche in den Halterungen eingeknüpft sind. Die Steckzapfen wiederum werden in die Tüllen eingesteckt. Steckzapfen, Aufnahmeöffnungen und Gummitüllen bilden zusammen die Befestigungsvorrichtung für die Scheibenwischanlage.

Nachteilig bei dieser Wischanlage ist jedoch, dass ihre Montage am Kraftfahrzeug relativ zeitaufwendig und nicht automatisierbar ist.

Aus der FR 2 770,880 Al ist eine Scheibenwischanlage mit einer Befestigungsvorrichtung bekannt, deren zwei äußere Befestigungsglieder in herkömmlicher Art zur Verwendung von Befestigungsschrauben ausgebildet sind. Die Befestigungsvorrichtung dieser Wischanlage ist also nicht als verschraubungsfrei zu bezeichnen.

Das mittlere Befestigungsglied umfasst eine von der Wischanlage abragende Blechzunge, auf deren umgebogenes und einfach aufeinandergefaltetes Ende ein kappenartiges Dämpfungselement aufgesteckt ist. Das Dämpfungselement hat also eine flache, nicht durchgehende Ausnehmung, in welche. das Ende der Blechzunge hineinragt. Dieses mit dem Dämpfungselement versehene Ende des Befestigungsgliedes wird bei der Montage der Wischanlage an das Fahrzeug lediglich längs in die am Fahrzeug vorgesehene Aufnahmeeinrichtung eingeschoben ohne dass das Befestigungsglied selbst gegen Herausrutschen gesichert ist. Bei Ausbildung der Befestigungsglieder einer verschraubungsfreien Befestigungsvorrichtung in der Art des mittleren aus der FR 2 770 880 A1 bekannten Befestigungsgliedes besteht die Gefahr, dass das Befestigungsglied bei Beaufschlagung mit Kräften aus der Aufnahmeeinrichtung herausrutschen kann.

Die vorliegende Erfindung hat daher die Aufgabe, eine Wischanlage der eingangs genannten Art so weiterzubilden, dass mit ihr eine. noch schnellere und dennoch sichere Montage möglich ist.

Diese Aufgabe wird durch eine Wischanlage mit den Merkmalen des Anspruchs 1 gelöst.

Die erfindungsgemäße Maßnahme ist ebenso einfach wie überraschend wirkungsvoll:

Im Gegensatz zum Stand der Technik, bei dem die Dämpfungselemente in die fahrzeugseitigen Aufnahmeeinrichtungen eingesetzt sind (DE-A-198 33 404) oder das Dämpfungselement kein abstehendes Ende mit einer Verdickung im Sinne eines Rastringes aufweist (FR-A-2 770 880) , wird.erfindungsgemäß mindestens ein Dämpfungselement, welches ein abragendes Ende mit einer Verdickung im Sinne eines Rastrings aufweist, die mit der Aufnahmeeinrichtung im Sinne einer Verrastung zusammenarbeitet, an einem anlagenseitigen Teil der Befestigungsvorrichtung angebracht. Das Dämpfungselement ist somit mit diesem anlagenseitigen Teil auch dann verbunden, wenn die Scheibenwischanlage noch nicht am Kraftfahrzeug befestigt ist. Das anlagenseitige Teil der Befestigungsvorrichtung der noch nicht in das Kraftfahrzeug eingebauten Scheibenwischanlage ist jedoch bestens zugänglich, wodurch das Anbringen des Dämpfungselementes leichter, schneller, sicherer und gegebenenfalls auch automatisiert durchgeführt werden kann. Das Zusammenwirken der Verdickung am Ende des Dämpfungselementes mit der Aufnahmeeinrichtung ermöglicht eine besonders sichere und einfache Rastverbindung der Scheibenwischanlage mit dem Kraftfahrzeug, ohne dass irgendwelche Schraubarbeiten notwendig sind.

Vorteilhafte Weiterbildungen der Erfindung sind in Unteransprüchen angegeben.

Gemäß einer Weiterbildung ist die Verdickung am Dämpfungselement konisch ausgebildet, was das axiale Einführen in die zugehörigen Aufnahmeeinrichtung erleichtert.

Bei einer Ausgestaltung der Erfindung sind an allen anlagenseitigen Teilen der Befestigungsvorrichtung entsprechende Dämpfungselemente angebracht. Hierdurch werden die oben genannten zeitlichen Vorteile maximiert.

Ferner ist besonders bevorzugt, wenn die Befestigungsglieder anlagenseitig und die Aufnahmeeinrichtungen fahrzeugseitig vorgesehen sind und mindestens ein Befestigungsglied einen zylindrischen Zapfen umfaßt, auf den das Dämpfungselement aufgeschoben ist. Hierbei handelt es sich um eine konstruktiv optimal einfache und Material sparende Gestaltung der Befestigungsglieder. Fahrzeugseitig sind nur zylindrische Bohrungen erforderlich, die einfach herzustellen sind. Auf einen zylindrischen Zapfen kann das Dämpfungselement leicht aufgeschoben werden, ohne dass eine besondere radiale Positionierung des Dämpfungselements gegenüber dem zylindrischen Zapfen berücksichtigt werden muss.

Bei einer anderen Weiterbildung der Erfindung ist das Dämpfungselement an dem Befestigungsglied befestigt, insbesondere durch eine Schraube verspannt. Durch diese Weiterbildung wird sichergestellt, dass bei der Montage, aber auch im späteren Betrieb, das Dämpfungselement sich nicht vom Befestigungsglied löst.

Bei einer anderen Weiterbildung ist vorgesehen, dass die Befestigungsglieder als Zapfen einstückig mit den Wischlagergehäusen bzw. mit dem Motorgehäuse oder dem Motorträger ausgebildet sind. Dieses verringert den Aufwand für die Herstellung der Wischanlage. Außerdem wird durch diese Maßnahme eine günstige Geometrie hinsichtlich der Befestigungspunkte verwirklicht.

Vorteilhaft ist weiterhin, wenn die als Zapfen ausgebildeten Befestigungsglieder gemäß einer weiteren Ausgestaltung an ihrem freien Ende pilzkopfartig verdickt geformt sind. Dadurch ist das auf dem Zapfen angeordnete Dämpfungselement gegen axiales Herunterrutschen gesichert, und bei sich entsprechend zum Ende hin, insbesondere kegelförmig, verjüngender Form des verdickten Endes kann dieses vorteilhaft bei der Montage der Wischanlage am Fahrzeug als Einführhilfe in die korrespondierende Aufnahme genutzt werden.

Vorzugsweise ist an mindestens einem anlagenseitigen Teil eine Ringschulter vorgesehen an der sich das Dämpfungselement abstützt. Auf diese Weise ist die axiale Positionierung des Dämpfungselements gegenüber der Scheibenwischanlage besonders einfach.

In eine ähnliche Richtung geht eine andere Weiterbildung, bei der das Dämpfungselement an seinem anlagenseitigen Ende einen Kragen aufweist, mit dem es sich anlagenseitig abstützt. Zusätzlich zum Vorteil der sicheren axialen Positionierung des Dämpfungselements gegenüber dem anlagenseitigen Teil sorgt diese weiterbildung der Erfindung für eine sichere schwingungsmäßige Entkopplung der Scheibenwischanlage vom Fahrzeug.

Wie eingangs ausgeführt wurde, sind beim Stand der Technik die fahrzeugseitigen Aufnahmeeinrichtungen in separaten Halteteilen vorgesehen. Dies ist deshalb notwendig, weil beim Stand der Technik die Gummitüllen fahrzeugseitig eingeknüpft sind, was nur bei der durch separate Halteteile realisierten Zugänglichkeit wirtschaftlich möglich ist. Dadurch, dass erfindungsgemäß das Dämpfungselement am anlagenseitigen Teil der Befestigungsvorrichtung angebracht ist, entfällt dieser Grund für ein separates Halteteil. Dem wird durch eine Weiterbildung der Erfindung Rechnung getragen, bei der mindestens eine fahrzeugseitige Aufnahmeeinrichtung direkt im Strukturblech des Fahrzeug vorhanden ist.

Dabei wird besonders bevorzugt, wenn mindestens eine fahrzeugseitige.Aufnahmeeihrichtung einen Blecheinzug umfaßt. Ein solcher Blecheinzug bildet eine Aufnahmebuchse, in welcher insbesondere ein zylindrisches Befestigungsglied und ein entsprechendes Dämpfungselement sicher aufgenommen werden kann. Darüber hinaus ist ein solcher Blecheinzug sehr einfach auch an einem Strukturblech des Fahrzeugs zu realisieren.

Eine gute Verbindung zischen dem Dämpfungselement und dem anlagenseitigen Teil wird dann erreicht, wenn das Dämpfungselement an das anlagenseitige Teil angespritzt ist.

Eine einfache Verbindung des Befestigungsglieds mit der Aufnahmeeinrichtung ist schließlich dann möglich, wenn dieses in die Aufnahmeeinrichtung einclipsbar ist.

Die vorliegende Erfindung betrifft auch ein Verfahren zum Befestigen einer derartigen Scheibenwischanlage an einem Fahrzeug, wobei mindestens drei voneinander beabstandete Befestigungsglieder und mindesteris drei Aufnahmeeinrichtungen vorgesehen sind, in die die Befestigungsglieder eingreifen können. Um die Durchführung des Verfahrens zu erleichtern und gegebenenfalls automatisieren zu können, wird erfindungsgemäß vorgeschlagen, dass zunächst ein Dämpfungselement aus einem schwingungsdämpfenden Material an mindestens einem anlagenseitigen Teil der Vorrichtung angebracht und dann das anlagenseitige Teil mit dem Dämpfungselement in oder auf das entsprechende fahrzeugseitige Teil ein- bzw. aufgesetzt wird.

Nachfolgend werden Ausführungsbeispiele der Erfindung unter Bezugnahme auf die beiliegende Zeichnung im Detail erläutert. In der Zeichnung zeigen:
- Fig. 1:: eine perspektivische Darstellung einer Scheibenwischanlage mit dem anlagenseitigen Bereich einer Befestigungsvorrichtung;
- Fig. 2:: einen fahrzeugseitigen Bereich der. Befestigungsvorrichtung der Scheibenwischanlage von Fig. 1;
- Fig. 3:: einen Schnitt längs der Line III-III von Fig. 2;
- Fig. 4:: ein Ausführungsbeispiel eines Befestigungsgliedes mit aufgeschobenem Dämpfungselement;
- Fig. 5:: eine Draufsicht auf ein Ausführungsbeispiel einer Aufnameeinrichtung;
- Fig. 6:: eine Vorderansicht der Aufnahmeeinrichtung von Figur 5 und eines entsprechenden Befestigungsglieds;
- Fig. 7:: eine Draufsicht auf ein weiteres Ausführungsbeispiel einer Aufnahmeeinrichtung;
- Fig. 8:: einen Längsschnitt durch ein weiteres Ausführungsbeispiel einer Aufnahmeeinrichtung mit einem entsprechenden Befestigungsglied; und
- Fig. 9:: eine Draufsicht auf die Aufnahmeeinrichtung von Figur 8.

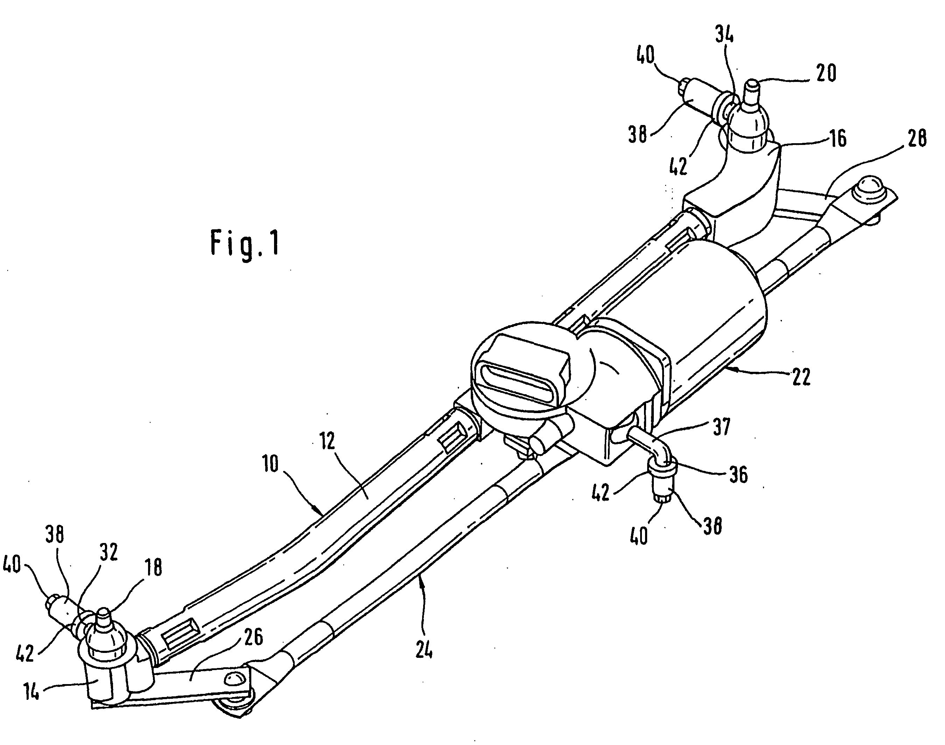

Eine Scheibenwischanlage für ein Kraftfahrzeug trägt in Fig. 1 insgesamt das Bezugszeichen 10. Sie umfasst einen stangenartigen Tragkörper 12, der an beiden Enden jeweils einen Lagerkörper 14 bzw. 16 trägt. In jedem Lagerkörper 14 bzw. 16 ist jeweils eine Wischerwelle 18 bzw. 20 zur Aufnahme eines Scheibenwischerarms axial gesichert und verdrehbar gelagert.

Auf dem Tragkörper 12 sitzt ungefähr auf dessen Mittelstück eine Antriebseinrichtung 22, welche auf ein Koppelgestänge 24 arbeitet. Das eine Ende des Koppelgestänges.24 ist mit einer Schwinge 26 gelenkig verbunden, welche wiederum mit der Wischerwelle 18 starr gekoppelt ist. Das andere Ende des Koppelgestänges 24 ist mit einer Schwinge 28 gelenkig verbunden, welche mit der Wischerwelle 20 starr verbunden ist.

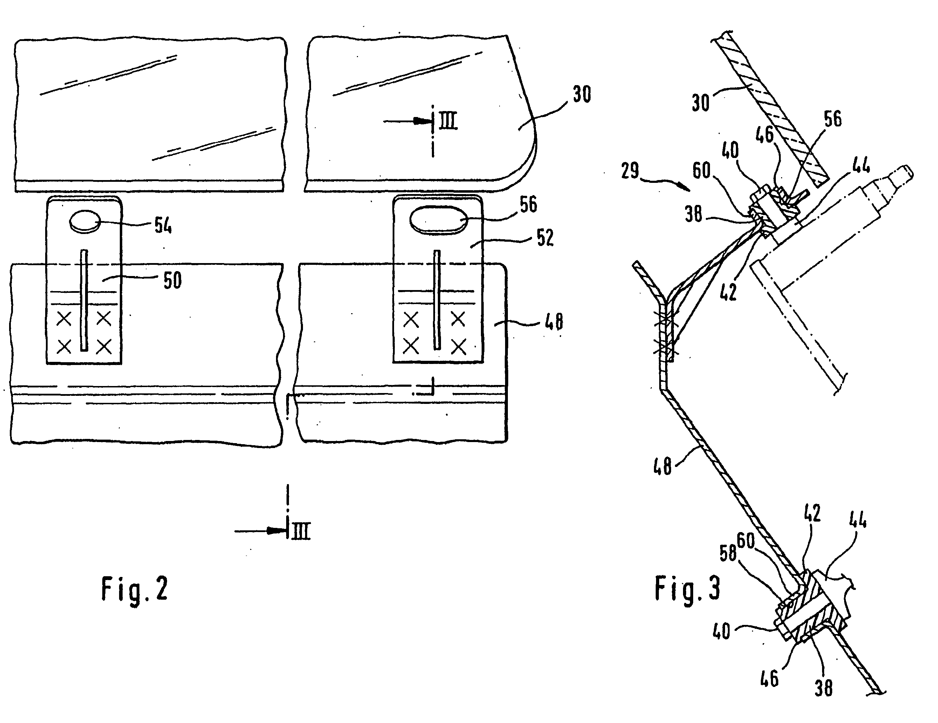

Die Scheibenwischanlage 10 ist mittels einer Befestigungsvorrichtung 29 mit einer verschraubungsfreien Steckverbindung unterhalb einer Windschutzscheibe 30 (vgl. Fig. 2 und 3) einer Fahrzeugkarosserie befestigbar. Zu diesem Zweck trägt jeder Lagerkörper 14, 16 einen zylindrischen Steckzapfen 32, 34, die zueinander parallel und in gleicher Richtung sowie in einem rechten Winkel zu den Wischerwellen 18 und 20 von den Lagerkörpern 14 und 16 abragen. Ein weiterer zylindrischer Steckzapfen trägt das Bezugszeichen 36 und ist an einem Distanzelement 37 auf der vom Tragkörper 12 abgewandten Seite der Antriebseinrichtung 22 starr befestigt.

Während die Achsen der Steckzapfen 32 und 34 in etwa in der durch den Tragköper 12 und das Koppelgestänge 24 aufgespannten Ebene liegen, steht die Achse des Steckzapfens 36 in etwa in einem rechten Winkel zu dieser Ebene, also auch in einem rechten Winkel zur Längserstreckung der beiden Steckzapfen 32 und 34. Die Steckzapfen 32 und 34 sind jeweils einstückig mit dem Lagerkörper 14 bzw. 16, und der Steckzapfen 36 ist einstückig mit dem Gehäuse der Antriebseinrichtung 22. Insgesamt liegen die Steckzapfen 32; 34 und 36 auf den Eckpunkten eines Dreiecks und bilden eine stabile Abstützbasis.

Auf die zylindrischen Steckzapfen 32, 34 und 36 ist jeweils eine Gummitülle 38 aufgesteckt und mit einer Schraube 40 mit dem jeweiligen Steckzapfen 32, 34 und 36 verspannt. An ihrem anlagenseitigen Ende trägt jede Gummitülle 38 einen Kragen 42. Dieser stützt sich wiederum an einer Ringschulter 44 (Figur 3) ab, welche an dem jeweiligen Steckzapfen 32, 34 bzw. 36 vorgesehen ist (die Ringschulter 44 am Steckzapfen 36 ist in Figur 1 nicht dargestellt). An ihrem anderen Ende trägt jede Gummitülle 38 eine Verdickung im Sinne eines ggf. auch konischen Rastringes 46, auf deren Sinn weiter unten eingegangen wird.

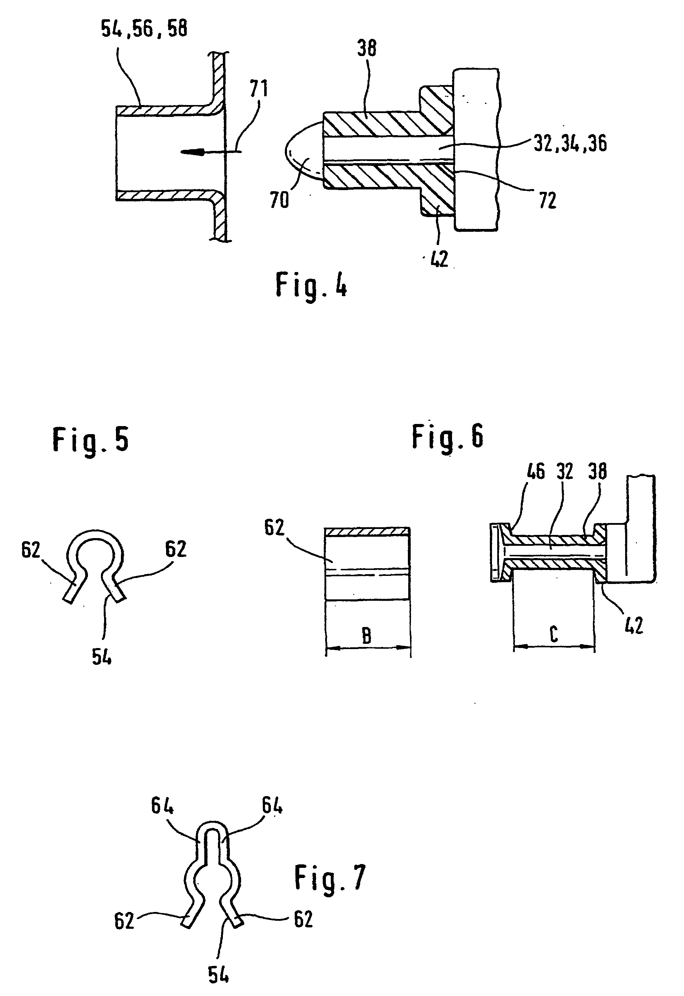

Bei dem Ausführungsbeispiel gemäß Figur 4 ist im Vergleich mit Figur 2 an Stelle einer Schraube 40 einfach eine pilzkopfartige Verdickung an das freie Ende 70 des jeweiligen Steckzapfens 32, 34, 36 angeformt, über die die Gummitülle aufgeschoben ist. Die Verdickung des Endes 70 ist kegelartig verjüngt, wobei sich diese Verjüngung auch noch am äußeren Rand des Dämpfungselementes fortsetzt, um bei Montage der Wischvorrichtung am Fahrzeug das Einführen des Zapfens 32, 34, 36 in Richtung des Pfeiles 71 in die korrespondierende Aufnahme 54, 56, 58 zu erleichtern. Am gegenüberliegenden Ende hat das Dämpfungselement 38 wiederum den bereits zuvor beschriebenen. Kragen 42. Außerdem ist bei diesem Ausführungsbeispiel an diesem Ende des Dämpfungselementes 38 eine kegelförmige Erweiterung 72 der durch das Dämpfungselement 38 hindurchgehenden Öffnung zu erkennen, die das Aufschieben des Dämpfungselementes 38 über das verdickte Ende 70 erleichtert.

Wie aus Fig. 2 ersichtlich ist, sind auf ein Strukturblech 48 des Kraftfahrzeugs zwei Halteteile 50 und 52 aufgepunktet. In das Halteteil 50 ist eine kreisförmige Aufnahmeöffnung 54 und in das Halteteil 52 eine als Langloch ausgebildete Aufnahmeöffnung 56 eingebracht. Die Ausbildung der Aufnahmeöffnung 56 als Langloch dient dazu, fertigungsbedingte Toleranzen bei der Positionierung der Halteteile 48 und 50 oder bei der Fertigung der Scheibenwischanlage 10 auszugleichen.

Direkt im Strukturblech 48 ist, wie aus Fig. 3 ersichtlich ist, eine weitere Aufnahmeöffnung 58 vorhanden. Alle Aufnahmeöffnungen 54, 56 und 58 sind als Blecheinzüge realisiert, welche einen in einem rechten Winkel zur Ebene des Strukturblechs 48 bzw. der Halteteile 50 und 52 stehenden zylindrischen Rohrabschnitt 60 umfassen, der eine Steckbuchse für die Steckzapfen 32, 34 und 36 und die Gummitüllen 38 bildet.

Die Steckzapfen 32, 34, 36, die Gummitüllen 38 und die Aufnahmeöffnungen 54, 56, 58 bilden insgesamt die Befestigungsvorrichtung 29 der Scheibenwischanlage 10. Bei der Montage wird folgendermaßen vorgegangen.

Zunächst werden die Gummitüllen 38 auf die Steckzapfen 32, 34 und 36 aufgeschoben, und zwar derart, dass sie mit ihrem Kragen 42 an der Ringschulter 44 der Steckzapfen 32, 34 bzw. 36 anliegen. Im Falle des Ausführungsbeispiels gemäß Figur 4 ist die Gummitülle 38 durch das pilzkopfartig verdickte Ende 70 des Zapfens, über den sie unter vorübergehender, Aufweitung geschoben wird, axial gesichert. Beim Ausführungsbeispiel gemäß Figur 2 wird nach dem Aufschieben der Gummitülle 38 die Schraube 40 aufgesetzt und angezogen, wodurch die Gummitülle 38 mit den jeweiligen Steckzapfen 32, 34 bzw. 36 fest verbunden ist (alternativ könnte die Gummitülle auch angespritzt oder aufvulkanisiert werden, wodurch diese Montageschritte eingespart werden). Nun wird die Scheibenwaschanlage 10 an den Einbauort gebracht und werden die Steckzapfen 32, 34 und 36 mit den vormontierten Gummitüllen 38 in die Aufnahmeöffnungen 54, 56 und 53 eingesteckt, bis einerseits der Kragen 42 der jeweiligen Gummitülle 38 am Strukturblech 4 8 bzw. an den Halteteilen 50 und 53 anliegt und andererseits, wenn vorhanden, der Rastring 46 am Ende der Gummitülle 38 aus dem Rohrabschnitt 60 austritt und hierdurch die Gummitülle 38 mit der jeweiligen Aufnahmeöffnung 54, 56 bzw. 58 verrastet.

Auf diese Weise wird eine einfach zu montierende und gleichzeitig ohne jede Schraubverbindung sichere Halterung der Scheibenwischanlage 10 am Kraftfahrzeug gewährleistet.

In den Figuren 5 bis 9 sind mehrere Ausführungsbeispiele für sogenannte "Clipsverbindungen" dargestellt. Teile, welche zu vorher beschriebenen Teilen funktionsäquivalent sind, tragen die gleichen Bezugszeichen und sind nicht nochmals im Detail beschrieben.

Bei diesen Clipsverbindungen ist die Aufnahmeeinrichtung 54 schellenförmig ausgebildet und umfaßt zwei flexible Klemmbacken 62. Die Breite B der Klemmbacken 62 muss dabei relativ exakt mit der Abmessung C des Dämpfungselements 38 zwischen Rastring 46 und Kragen 42 auf dem Steckzapfen 32 abgestimmt sein, um im eingebauten Zustand eine axiale Bewegung des Steckzapfens 32 gegenüber der Aufnahmeeinrichtung 54 zu vermeiden.

Die Aufnahmeeinrichtungen 54 der Figuren 5 und 7 unterscheiden sich durch die Ausgestaltung ihrer Klemmbacken 62, welche bei der Aufnahmeeinrichtung 54 von Figur 7 jeweils zusätzlich einen geraden Biegeabschnitt 64 aufweisen, durch den die Flexibilität und der mögliche Öffnungswinkel der Aufnahmeeinrichtung 54 erhöht werden.

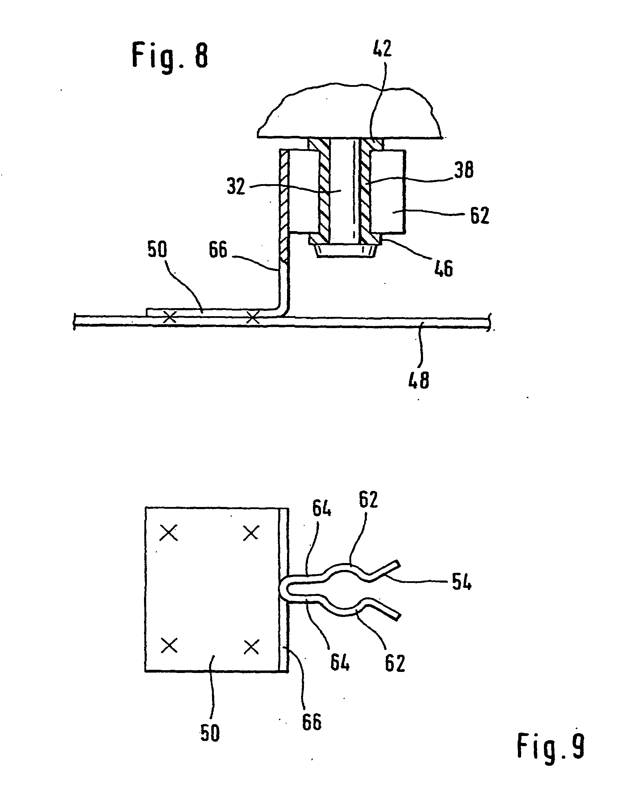

In den Figuren 8 und 9 ist eine Ausgestaltung einer schellenförmigen Aufnahmeeinrichtung 54 gezeigt, welche einstückig mit einem fahrzeugseitigen Halteteil 50 aus Blech ausgebildet ist. Das Halteteil 50 umfasst eine 90°-Hochkantung 66, welche in ihrem oberen Bereich von der Seite her bis nicht ganz zur Mitte eingeschnitten ist. Die hierdurch erhaltenen Blechstreifen sind so gebogen, dass entsprechende Klemmbacken 62 gebildet werden.

Die schellenförmigen Aufnahmeeinrichtungen 52 haben den Vorteil, dass sie eine sichere Verrastung mit einem entsprechenden Dämpfungselement 38 ermöglichen und bei der Montage der Scheibenwischeranlage 10 an das Fahrzeug beinahe beliebige Montagerichtungen möglich sind.

## Patentansprüche

1. Wischanlage für eine Scheibe (30) eines Kraftfahrzeugs mit einer verschraubungsfreien Befestigungsvorrichtung (29), welche mindestens drei voneinander beabstandete Befestigungsglieder (32, 34, 36) aufweist, von denen zwei (32, 34) auf einer Verbindungslinie liegen und das dritte (36) von der Verbindungslinie beabstandet ist, und welche mindestens drei Aufnahmeeinrichtungen (54, 56, 58) umfasst, in die die Befestigungsglieder (32, 34, 36) eingreifen können, wobei zwischen mindestens einem Befestigungsglied (32, 34, 36) und der entsprechenden Aufnahmeeinrichtung (54, 56, 58) ein Dämpfungselement (38) aus einem schwingungsdämpfenden Material vorgesehen und das Dämpfungselement (38) an einem anlagenseitigen Teil (32, 34, 36) der Vorrichtung angebracht ist, **dadurch gekennzeichnet, dass** das Dämpfungselement (38) ein abragendes Ende mit einer Verdickung im Sinne eines Rastrings (46) aufweist, welche mit der Aufnahmeeinrichtung (54, 56, 58) im Sinne einer Verrastung zusammenarbeitet.

2. Wischanlage nach Anspruch 1, **dadurch gekennzeichnet, dass** die Verdickung am Dämpfungselement konisch ist.

3. Wischanlage nach Anspruch 1 oder 2, **dadurch gekennzeichnet, dass** an allen anlagenseitigen Teilen (32, 34, 36) der Befestigungsvorrichtung (29) Dämpfungselemente (38) vorgesehen sind.

4. Wischanlage nach einem der vorhergehenden Ansprüche, **dadurch gekennzeichnet, dass** die Befestigungsglieder (32, 34, 36) anlagenseitig und die Aufnahmeeinrichtungen (54, 56, 58) fahrzeugseitig vorgesehen sind und mindestens ein Befestigungsglied einen zylindrischen Zapfen (32, 34, 36) umfasst, auf den das Dämpfungselement (38) aufgeschoben ist.

5. Wischanlage nach Anspruch 4, **dadurch gekennzeichnet, dass** das Dämpfungselement (38) an dem Befestigungsglied (32, 34, 36) befestigt, insbesondere durch eine Schraube (40) verspannt ist.

6. Wischlage nach Anspruch 4, **dadurch gekennzeichnet, dass** die Zapfen (32, 34, 36) einstückig mit den Wischlagergehäuse bzw. mit dem Motorgehäuse oder dem Motorträger ausgebildet sind.

7. Wischanlage nach Anspruch 4 oder 5, **dadurch gekennzeichnet, dass** das freie Ende (70) des Zapfens(32, 34, 36) pilzkopfartig verdickt ausgebildet ist.

8. Wischanlage nach einem der vorhergehenden Ansprüche, **dadurch gekennzeichnet, dass** an mindestens einem anlagenseitigen Teil (32, 34, 36) der Befestigungsvorrichtung (29) eine Ringschulter (44) vorgesehen ist, an der sich das Dämpfungselement (38) abstützt.

9. Wischanlage nach einem der vorhergehenden Ansprüche, **dadurch gekennzeichnet, dass** das Dämpfungselement (38) einen Kragen (42) aufweist, mit dem es sich anlagenseitig abstützt.

10. Wischanlage nach einem der vorhergehenden Ansprüche, **dadurch gekennzeichnet, dass** mindestens eine fahrzeugseitige Aufnahmeeinrichtung (58) direkt im Strukturblech (48) des Fahrzeugs vorhanden ist.

11. Wischanlage nach einem der vorhergehenden Ansprüche, **dadurch gekennzeichnet, dass** mindestens eine fahrzeugseitige Aufnahmeeinrichtung (54, 56, 58) einen Blecheinzug (60) umfasst.

12. Wischanlage nach einem der vorhergehenden Ansprüche, **dadurch gekennzeichnet, dass** das Dämpfungselement (38) in das anlagenseitige Teil der Befestigungsvorrichtung (29) ein- oder auf dieser aufgespritzt ist.

13. Wischanlage nach einem der vorhergehenden Ansprüche, **dadurch gekennzeichnet, dass** das Befestigungsglied (32) in die Aufnahmeeinrichtung (52) einclipsbar ist.

14. Verfahren zum Befestigen einer Scheibenwischanlage nach einem der Ansprüche 1 bis 13 an einem Fahrzeug, **dadurch gekennzeichnet, dass** zunächst ein Dämpfungselement (38) aus einem schwingungsdämpfenden Material an mindestens einem anlagenseitigen Teil (32, 34, 36) der Befestigungsvorrichtung (29) angeordnet und dann das anlagenseitige Teil (32, 34, 36) mit dem Dämpfungselement (38) in das entsprechende fahrzeugseitige Teil (54, 56, 58) eingesetzt wird.

## Claims

1. Wiper system for a windscreen (30) of a motor vehicle, comprising a screwless securing mechanism (29) which has at least three securing members (32, 34, 36) at a distance from one another, of which two (32, 34) lie on a connecting line and the third (36) is at a distance from the connecting line, and which includes at least three receiving devices (54, 56, 58) into which the securing members (32, 34, 36) can engage, wherein a damping element (38) made of a vibration-damping material is provided between at least one securing member (32, 34, 36) and the corresponding receiving device (54, 56, 58) and the damping element (38) is fastened to a system-side component (32, 34, 36) of the mechanism, **characterized in that** the damping element (38) has a projecting end with a thickened part in the manner of a retaining ring (46) which cooperates with the receiving device (54, 56, 58) in the manner of a latched connection.

2. Wiper system according to Claim 1, **characterized in that** the thickened part on the damping element is conical.

3. Wiper system according to Claim 1 or 2, **characterized in that** damping elements (38) are provided on all the system-side components (32, 34, 36) of the securing mechanism (29).

4. Wiper system according to one of the preceding claims, **characterized in that** the securing members (32, 34, 36) are provided on the system side and the receiving devices (54, 56, 58) are provided on the vehicle side, and at least one securing member includes a cylindrical stud (32, 34, 36) onto which the damping element (38) is pushed.

5. Wiper system according to Claim 4, **characterized in that** the damping element (38) is fastened to the securing member (32, 34, 36), in particular is secured by a bolt (40).

6. Wiper system according to Claim 4, **characterized in that** the studs (32, 34, 36) are made in one piece with the wiper bearing housing or with the engine casing or with the engine mount.

7. Wiper system according to Claim 4 or 5, **characterized in that** the free end (70) of the stud (32, 34, 36) is thickened like a mushroom cap.

8. Wiper system according to one of the preceding claims, **characterized in that** an annular shoulder (44) is provided on at least one system-side component (32, 34, 36) of the securing mechanism (29), the damping element (38) being supported against said shoulder.

9. Wiper system according to one of the preceding claims, **characterized in that** the damping element (38) has a collar (42) by means of which it is supported on the system side.

10. Wiper system according to one of the preceding claims, **characterized in that** at least one vehicle-side receiving device (58) is located directly in the structural metal panel (48) of the vehicle.

11. Wiper system according to one of the preceding claims, **characterized in that** at least one vehicle-side receiving device (54, 56, 58) comprises a draw (60) in the metal panel.

12. Wiper system according to one of the preceding claims, **characterized in that** the damping element (38) is sprayed into or onto the system-side component of the securing mechanism (29).

13. Wiper system according to one of the preceding claims, **characterized in that** the securing member (32) can be clipped into the receiving device (52).

14. Method of securing a windscreen wiper system according to one of Claims 1 to 13 to a vehicle, **characterized in that** firstly a damping element (38) made of a vibration-damping material is arranged on at least one system-side component (32, 34, 36) of the securing mechanism (29) and then the system-side component (32, 34, 36) with the damping element (38) is inserted into the corresponding vehicle-side component (54, 56, 58).

## Revendications

1. Système d'essuie-glace pour un pare-brise (30) d'un véhicule comportant un dispositif de fixation sans vis (29) qui présente au moins trois éléments de fixation (32, 34, 36) à distance les uns des autres, dont deux (32, 34) se trouvent sur une ligne d'assemblage, et le troisième (36) est à distance de la ligne d'assemblage, et qui comprend au moins trois dispositifs de positionnement (54, 56, 58) dans lequel les éléments de fixation (32. 34, 36) peuvent s'engager, un élément antivibratoire (38) constitué d'un matériau absorbant les vibrations étant prévu entre au moins un élément de fixation (32, 34, 36) et le dispositif de positionnement (54, 56, 58) correspondant, et l'élément antivibratoire (38) étant monté sur une pièce côté essuie-glace (32, 34, 36) du dispositif, **caractérisé en ce que** l'élément antivibratoire (38) présente une extrémité saillante avec un épaississement au sens d'une bague d'encliquetage (46) qui exerce une action d'enclenchement en interaction avec le dispositif de positionnement (54, 56, 58).

2. Système d'essuie-glace selon la revendication 1, **caractérisé en ce que** l'épaississement sur l'élément antivibratoire est conique.

3. Système d'essuie-glace selon la revendication 1 ou 2, **caractérisé en ce que** des éléments antivibratoires (38) sont prévus sur toutes les pièces côté essuie-glace (32, 34, 36) du dispositif de fixation (29).

4. Système d'essuie-glace selon une des revendications précédentes, **caractérisé en ce que** les éléments de fixation (32, 34, 36) sont prévus côté essuie-glace et les dispositifs de positionnement (54, 56, 58) côté véhicule, et qu'au moins un élément de fixation comprend un pivot à douille cylindrique (32, 34, 36) sur lequel l'élément antivibratoire (38) est enfilé.

5. Système d'essuie-glace selon la revendication 4, **caractérisé en ce que** l'élément antivibratoire (38) est fixé sur l'élément de fixation (32, 34, 36), en particulier serré par une vis (40).

6. Système d'essuie-glace selon la revendication 4, **caractérisé en ce que** les pivots (32, 34, 36) sont conçus d'une seule pièce avec le carter du palier d'essuie-glace et/ou avec le carter moteur ou le support moteur.

7. Système d'essuie-glace selon la revendication 4 ou 5, **caractérisé en ce que** l'extrémité libre (70) du pivot (32, 34, 36) est conçue épaissie en forme de champignon.

8. Système d'essuie-glace selon une des revendications précédentes, **caractérisé en ce que** sur au moins une pièce (32, 34, 36) côté essuie-glace est prévu un épaulement annulaire (44) sur lequel s'appuie l'élément antivibratoire (38).

9. Système d'essuie-glace selon une des revendications précédentes, **caractérisé en ce que** l'élément antivibratoire (38) présente un collet (42) avec lequel il s'appuie côté essuie-glace.

10. Système d'essuie-glace selon une des revendications précédentes, **caractérisé en ce qu'**au moins un dispositif de positionnement (56) côté véhicule est présent directement dans la tôle de structure (48) du véhicule.

11. Système d'essuie-glace selon une des revendications précédentes, **caractérisé en ce qu'**au moins un dispositif de positionnement (54, 56, 58) côté véhicule comprend un renfoncement de tôle (60).

12. Système d'essuie-glace selon une des revendications précédentes, **caractérisé en ce que** l'élément antivibratoire (38) est produit par injection dans ou sur la pièce côté essuie-glace du dispositif de fixation (39).

13. Système d'essuie-glace selon une des revendications précédentes, **caractérisé en ce que** l'élément de fixation (32) peut être introduit par clippage dans le dispositif de positionnement (52).

14. Procédé de fixation d'un système d'essuie-glace selon une des revendications 1 à 13 sur un véhicule, **caractérisé en ce qu'**un élément antivibratoire (38) constitué d'un matériau absorbant les vibrations est tout d'abord disposé sur au moins une pièce côté essuie-glace (32, 34, 36) et que la pièce côté essuie-glace (32, 34, 36) portant l'élément antivibratoire (38) est ensuite placée dans la pièce correspondante côté véhicule (54, 56, 58).
